## Europäisches Patentamt

## European Patent Office

## Office européen des brevets

(11) Veröffentlichungsnummer: **0 014 728**
**B1**

(12) **EUROPÄISCHE PATENTSCHRIFT**

(45) Veröffentlichungstag der Patentschrift:
**22.12.82**

(51) Int. Cl.³: **F 16 B 13/14**

(21) Anmeldenummer: **79100563.0**

(22) Anmeldetag: **26.02.79**

(54) Hohler Verpressdübel.

(43) Veröffentlichungstag der Anmeldung:
**03.09.80 Patentblatt 80/18**

(45) Bekanntmachung des Hinweises auf die Patenterteilung:
**22.12.82 Patentblatt 82/51**

(84) Benannte Vertragsstaaten:
**BE CH FR NL SE**

(56) Entgegenhaltungen:
**AT-B-335 922**
**CH-A-449 900**
**DE-A-1 583 066**
**DE-A-2 410 212**
**DE-A-2 541 762**
**DE-A-2 641 776**
**DE-B-1 259 817**
**DE-B-2 550 294**
**DE-U-7 024 434**
**DE-U-7 734 879**
**FR-A-2 353 682**
**GB-A-434 438**
**US-A-4 068 481**
**US-D-616 084**

(73) Patentinhaber: **Joly, Günter, Parkweg 12,
D-4930 Detmold-Schanze (DE)**

(72) Erfinder: **Joly, Günter, Parkweg 12,
D-4930 Detmold-Schanze (DE)**

(74) Vertreter: **Cohausz, Werner, Dipl.-Ing. et al,
Schumannstrasse 97, D-4000 Düsseldorf (DE)**

ACTORUM AG

## Hohler Verpressdübel

Die Erfindung betrifft einen hohlen Verpressdübel mit einem aufsteckbaren Verschlussstopfen für den dichten Bohrlochabschluss, wobei der Dübelschaft teilweise in eine Bauwerksbohrung einsteckbar und im Bohrloch durch eine aushärtbare Füllmasse fixierbar ist, die durch den Dübelschafthohlraum in das Bohrloch einpressbar ist und an dessen frei herausragendem Abschnitt Bekleidungsteile oder andere Bauteile befestigbar sind.

Aus der deutschen Offenlegungsschrift 25 40 197 ist es bekannt, Dübel in einer Bohrung einer Wand durch eine Füllmasse einzugiessen, die durch eine Längskammer des Dübels eingedrückt wird und aus radialen Öffnungen in den Zwischenraum zwischen der Bohrungswandung der tragend Wand und dem Umfang des Dübels austritt. Ein derartiger Dübel gewährleistet nicht eine gleichmässige Verteilung der eingedrückten Masse im Bohrloch, da die Luft aus dem Bohrloch nicht immer restlos ausströmt. Ferner ist es schwer festzustellen, ob genügend Füllmasse eingepresst wurde.

Bei dem aus der deutschen Offenlegungsschrift 25 40 197 bekannten Dübel ist an dem aus der Bohrung herausragenden Dübelschaft eine Fassadenplatte unbeweglich gegenüber dem Dübel befestigt, so dass ein Ausdehnen und Zusammenziehen der Wandverkleidungsplatten nicht ausgeglichen werden kann. Ferner weist der Dübelschaft nur eine geringe Tragfläche für die Wandverkleidungsplatten auf, und ein nachträgliches Befestigen von Wandverkleidungsplatten, nachdem sie schon vor der Wand hängen, kann nicht vorgenommen werden, da nach dem Einstecken des Dübels in das Bohrloch der Wand ein Anschlag für die Rückseite der Fassadenplatte am Dübel nicht mehr geschaffen werden kann.

Aus der deutschen Offenlegungsschrift 26 24 559 ist ein Gebirgsanker mit einem kurzen Einfüllrohr und einem längeren Entlüftungsrohr bekannt. Ein Gebirgsanker dient dazu, Gebirge zu verfestigen und muss nicht Querkräfte aufnehmen, die durch aussen angebrachte Teile entstehen. Die Einfüll- und Entlüftungsrohre dienen nicht der Versteifung und Erhöhung der Knickfestigkeit des Gebirgsankers. Auch führt das Einfüllen aufgrund der geringen Länge des Einfüllrohres die Füllmasse nicht an das innere Ankerende, so dass ein vollständiges Verfüllen des Bohrloches nicht gewährleistet ist und die Füllmasse nach aussen fliessen kann, auch über die seitlichen Schlitze des Entlüftungsrohrs, ehe sie das Bohrlochende erreicht. Zudem reicht das Profil, das den Ankerkopf bildet, nur zu einem kleineren Teil in das Bohrloch hinein, während der Rest des Körpers des Gebirgsankers von einer Glasfaserhülle, Stützen und dem einliegenden Entlüftungsrohr gebildet wird.

Aufgabe der Erfindung ist es, einen Dübel der eingangs genannten Art derart zu verbessern, dass ein sicheres Füllen des in der Wand befindlichen Bohrloches gewährleistet ist, und dass auf die Bekleidungs- und Bauteile einwirkende Druck- und Zugkräfte normal und parallel zur Wand vom Dübel sicher übertragen und aufgenommen als auch vom Dübel abgehalten werden.

Insbesondere liegen der Erfindung folgende Aufgaben zugrunde:

Einen hohlen Verpressdübel für die nachfolgende Befestigung von Bauteilen derart zu verbessern, dass er bei einfacher Herstellung eine hohe Eigenfestigkeit erhält;

dass eine gute Entlüftung und sichere Kontrolle des zu füllenden Bohrlochhohlraumes und des Dübelschafthohlraumes gewährleistet ist;

dass eine gezielte Mörtelführung und eine den bauaufsichtlichen Bestimmungen einwandfreie Befestigung im Baugrund gewährleistet ist;

dass unter Verwendung von preiswerten Fertigprofilen die zusätzliche Längskammer auf besonders einfache Weise anbringbar ist;

dass eine Längskammer mit ausreichender Dichtigkeit geschaffen wird.

Diese Aufgaben werden erfindungsgemäss dadurch gelöst, dass der Hohlraum des Dübelschaftes durch mindestens eine, sich über die Schaftlänge erstreckende, innere, den Dübel versteifende Trennwand in getrennte Einfüll- und Entlüftungslängskammern unterteilt ist.

Die den Dübelhohlraum in zwei Längskammern unterteilende Trennwand erhöht wesentlich die Festigkeit, insbesondere die Knickfestigkeit, des Verpressdübels. Dabei kann der Verpressdübel um seine Längsachse in eine Stellung gedreht werden, in der die Trennwand in die Richtung zeigt, aus der die grössten Kräfte aufgenommen werden müssen. Durch die Einteilung in zwei Längskammern kann eine Kammer zur Entlüftung des Bohrlochs verwendet werden, wodurch eine sichere Verteilung der später erhärtenden Masse erzielt wird. Ferner wird durch ein Austreten von Masse aus der zusätzlichen Längskammer angezeigt, dass die Bohrung vollständig gefüllt ist. Durch das vollständige Füllen beider Längskammern mit Masse wird nach ihrer Erhärtung die Festigkeit des Verpressdübels wesentlich erhöht. Auch kann der Dübel nachträglich von aussen durch eine bereits vorgehängte Fassadenplatte gesteckt und montiert werden. Hierdurch wird auch eine nachträgliche Sanierung von Gebäuden ermöglicht. Da der erfindungsgemässe Verpressdübel aus einem über seine gesamte Länge einen gleichen Querschnitt aufweisenden Hohlprofil besteht, ist er billig und einfach herstellbar.

Eine besonders hohe Steifigkeit in der gewünschten Richtung und eine einfache und preiswerte Herstellung wird dann erreicht, wenn die innere Trennwand eben ausgeführt ist.

Eine besonders einfache Herstellung ist dann gegeben, wenn das Hohlprofil aus Blech, insbesondere Edelstahl, gefaltet und gestanzt wird. Dabei kann das Hohlprofil ein Vierkantrohr sein. Besonders hohe Kräfte sind aufnehmbar, wenn beide seitlichen, sich längs ertreckenden Randbereiche des Blechabschnitts aneinanderliegend eine doppelwandige Trennwand bilden.

Das Hohlprofil kann einen rechteckigen Querschnitt aufweisen, wobei die Trennwand parallel zu zwei Seitenwänden angeordnet sein sollte, um hohe Kräfte aus einer Richtung, insbesondere der senkrechten, aufnehmen zu können. Das Hohlprofil kann auch einen dreieckförmigen Querschnitt aufweisen, wobei die Trennwand die Höhe des Dreiecks bildet. Alternativ kann das Hohlprofil auch einen kreisförmigen Querschnitt besitzen und die Trennwand den Durchmesser bilden. Rechteckige und dreieckige Querschnitte erbringen den Vorteil, dass zwischen dem Hohlprofil und der Bohrungswandung verhältnismässig grosse Resträume verbleiben, so dass eine ausreichende Benetzung sichergestellt ist und ein vorzeitiges Eintrocknen der eingepressten Masse, insbesondere eines Mörtels, verhindert wird.

Um eine sichere Anlage für die am Element zu befestigenden Teile oder Platten zu schaffen und um einen ästhetischen Abschluss zu bringen, wird vorgeschlagen, dass am vorderen Ende des herausragenden Abschnitts eine Abschlussscheibe auf der Stirnseite des Dübelschaftes befestigt ist, die einen grösseren Durchmesser aufweist als der des Schaftes und die die Öffnungen der Längskammer bis auf eine Eintrittsöffnung für die einzuführende Masse und eine Austrittsöffnung (Kontrollöffnung) für die entweichende Luft verschliesst. Dabei kann die Abschlussscheibe zu ihrer Befestigung mindestens eine Erweiterung aufweisen, die in einer der Längskammern oder in beiden einliegt.

Um ein Austreten der in die Bohrung eingedrückten Masse zu verhindern und um die auf den Bauwerksdübel einwirkenden Wechselbiegebeanspruchungen nicht punktförmig einwirken zu lassen, sondern auf eine grössere Fläche zu verteilen, wird vorgeschlagen, dass in der Eingangsöffnung der Bohrung der Wand, Decke, Boden od. dgl. eine das Hohlprofil bzw. den Schaft umgebende Abschlusshülse aus elastischem Material einliegt, deren Öffnung dem Querschnitt des Hohlprofils entspricht und die mit ihrer Aussenseite an der Bohrungswandung anliegt. Dabei kann die Abschlusshülse einen schlauchabschnittförmigen Ansatz aufweisen, der mit einer Seite an der Hülse befestigt ist und mit der freien Seite zum Bohrungsgrund weist, so dass der Ansatz durch die eingepresste Masse nach aussen gegen die Bohrungswand gedrückt wird und eine sichere Abdichtung schafft.

Ferner wird vorgeschlagen, dass zur Zentrierung und Arretierung des Hohlprofils in der Bohrung und/oder dem zu befestigenden Teil oder Platte an der Aussenseite des Hohlprofils Abstandshalter angeordnet sind. Für den Austritt der erhärteten Masse und/oder den Auslass von Luft in der Seitenwandung des Hohlprofils können Öffnungen angeordnet sein.

Toleranzen in der Fassadenplattendicke als auch im Abstand zwischen Wand und Fassadenplatte sind dadurch ausgleichbar, dass an der Abschlussscheibe eine Hülse befestigt ist, die das freie Ende des Dübelschaftes aussen umgreift und insbesondere auf dem freien Ende aufgeschraubt ist. Sogkräfte an den Fassadenplatten sind dadurch durch den Dübel aufnehmbar, dass die Hülse auf den Dübelschaft aufgeschraubt ist.

Konstruktiv besonders einfache Ausführungen hoher Stabilität bei einfachster Montage sind in den weiteren Unteransprüchen aufgeführt.

Ausführungsbeispiele der Erfindung sind in den Zeichnungen meist schematisch dargestellt und werden im folgenden näher beschrieben.

Es zeigen:

Fig. 1 einen senkrechten Schnitt durch einen in einer tragenden Mauer eingesetzten, eine Fassadenplatte tragenden Verpressdübel entsprechend der Linie I-I in Fig. 2;

Fig. 2 einen Schnitt durch den Vorpressdübel nach der Linie II-II in Fig. 1;

Fig. 3 einen der Fig. 2 entsprechenden Schnitt einer alternativen Ausführung;

Fig. 4 einen Schnitt entsprechend Fig. 1 einer alternativen Ausführung;

Fig. 5 eine Draufsicht auf eine Abschlussscheibe;

Fig. 6 und 7 Schnitte durch den Vorpressdübel alternativer Ausführungsformen;

Fig. 8 und 9 rückseitige Befestigungsarten des Vorpressdübels an Platten;

Fig. 10 einen Abstandshalter;

Fig. 11 einen Verpressdübel mit aufgeschobener Abstandshülse;

Fig. 12 einen senkrechten Schnitt durch einen in einer Mauer eingesetzten Verpressdübel, der eine Fassadenplatte trägt;

Fig. 13 eine Ansicht einer metallenen Hülse;

Fig. 14 eine perspektivische Ansicht einer Hülse nach Fig. 13;

Fig. 15 eine alternative Ausführung einer metallenen Hülse;

Fig. 16 eine perspektivische Ansicht einer den Dübel aussen abschliessenden Scheibe;

Fig. 17 eine perspektivische Ansicht einer Hülse aus elastischem Material;

Fig. 18 eine Seitenansicht einer metallenen Hülse in einer dritten Ausführungsart;

Fig. 19 eine perspektivische Ansicht einer Hülse nach Fig. 18;

Fig. 20 eine frontale Ansicht eines in den Kreuzungspunkt der Fugen von vier Platten eingesetzten Dübels;

Fig. 21 eine Ansicht nach Fig. 20 mit einem alternativ ausgeführten Dübel;

Fig. 22 eine perspektivische Ansicht eines Dübels nach Fig. 20;

Fig. 23 eine Ansicht auf mehrere Fassadenplatten mit Dübeln nach Fig. 20 und Fig. 21;

Fig. 24 einen Dübel mit angelenktem kastenförmigem Teil zur Bildung eines Anschlags für die Fassadenplatte;

Fig. 25 einen Schnitt durch einen Dübel nach Fig. 24 mit in die Senkrechte verschwenktem kastenförmigem Teil und anliegender Fassaden-platte;

Fig. 26 eine perspektivische Ansicht eines Dübels nach Fig. 25;

Fig. 27 einen in einer Fassadenplatte eingesteckten Dübel mit einliegendem Stift zur Bildung eines Anschlags;

Fig. 28 einen Dübel mit daran befestigter längsgeschlitzter Platte;

Fig. 29 zwei Dübel mit angelenkten Hebeln;

Fig. 30 eine an einer Hülse angelenkte Platte zur Bildung eines Anschlags mit anliegender Fassadenplatte;

Fig. 31 eine perspektivische Ansicht einer Hülse nach Fig. 30;

Fig. 32 einen in einem Bohrloch der Wand und einer Fassadenplatte einliegenden Dübel, der in den Zwischenraum zwischen Wand und Fassadenplatte ein Netz trägt; und

Fig. 33 einen Dübel nach Fig. 32 mit durch Füllmasse erweitertem Netz.

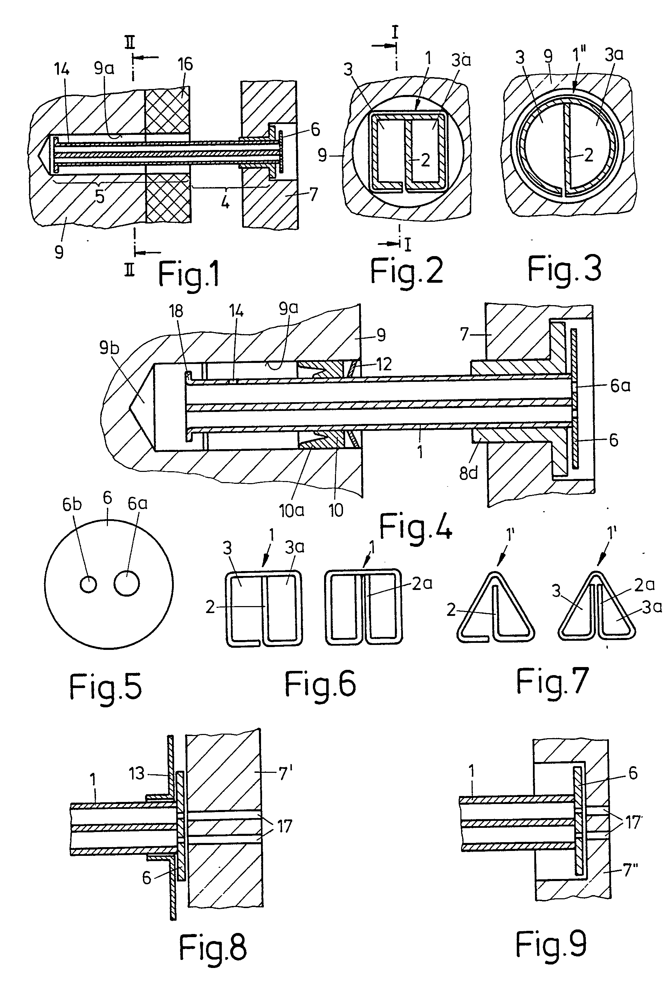

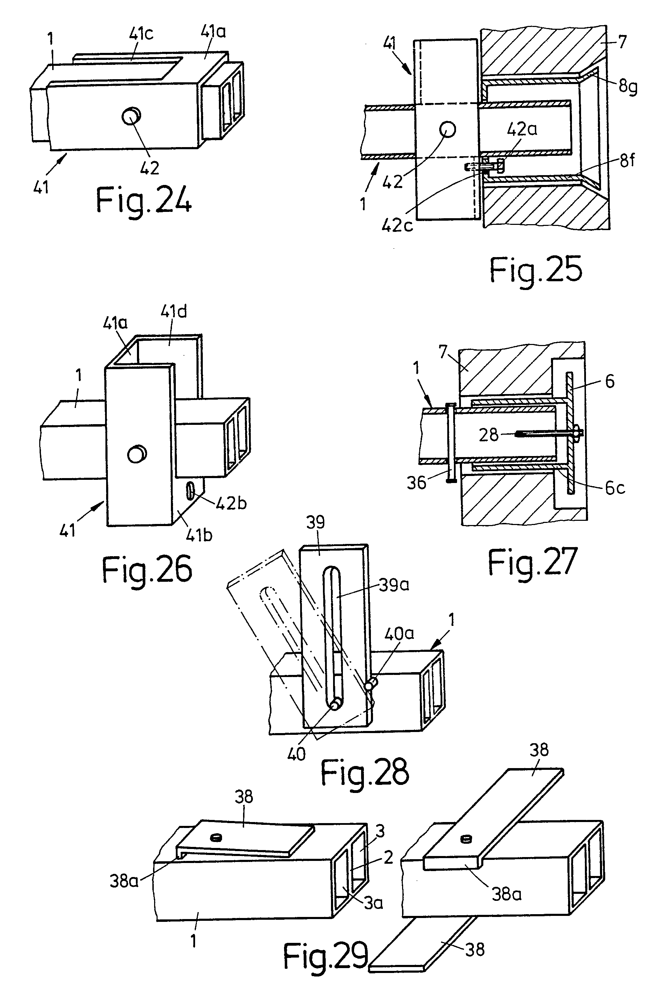

Vor einer Wand 9, z.B. aus Ziegelsteinen oder Beton, ist eine wärmedämmende Schicht 16 angeordnet und vor dieser in einem Abstand zur Hinterlüftung eine Platte 7 einer vorgehängten Fassade. Die Fassadenplatte 7 weist eine stufenförmige (Fig. 4, 12) oder konische Bohrung (Fig. 25) auf, durch die ein Verpressdübel gesteckt ist, der durch eine Bohrung der Wärmedämmung in eine Bohrung 9a der tragenden Wand 9 hineinreicht. Der Verpressdübel besteht im wesentlichen aus einem von einem Hohlprofil gebildeten Schaft, 1, 1', 1'', der sich zum Grund 9b des Bohrloches und auf der gegenüberliegenden Seite nach aussen hin öffnet. Der Dübelschaft 1 ist aus einem rechteckförmigen Blechabschnitt aus Edelstahl zu einem quadratischen oder rechteckförmigen Querschnitt gestanzt und gefaltet, wobei entsprechend Fig. 2 und 6 ein seitlicher, sich längs erstreckender Randbereich des Blechabschnitts eine innere Trennwand 2 bildet, die in der Mitte des Schaftes parallel zu zwei Seitenwänden angeordnet ist und auf eine dritte Seitenwand stösst, um dadurch den inneren Kanal des Schaftes in zwei gleich grosse oder verschieden grosse Längskammern 3, 3a (Kanäle) zu teilen. Um eine Verstärkung der Trennwand zu erhalten, kann diese dadurch doppelwandig ausgeführt werden, dass beide seitlichen, sich längs erstreckenden Randbereiche des Blechabschnitts nach innen umgebogen sind und mit ihren Seitenflächen aneinanderliegen (Fig. 6). Ferner kann der Schaft auch einen dreieckförmigen (Fig. 7) oder einen kreisförmigen (Fig. 3) Querschnitt aufweisen. Bei einem kreisförmigen Querschnitt kann der Nachteil entstehen, dass in der Bohrung der tragenden Wand zu wenig Verfüllraum um den Schaft herum für eine einzupressende, später erhärtende Masse verbleibt, so dass rechteckförmige oder dreieckige Querschnitte meistens vorzuziehen sind.

Aus dem herausragenden Abschnitt 4 des Schaftes 1 ist an der Stirnseite eine Abschlussscheibe 6 rechtwinklig zur Profillängsachse befestigt, die die obengenannten Öffnungen 6a und 6b aufweist, von denen die eine zur Längskammer 3 und die andere zur Längskammer 3a führt. Durch die Eintrittsöffnung 6a wird erhärtbare Masse, wie Kunststoff oder Mörtel, so lange eingepresst, bis alle Luft durch die Austrittsöffnung 6b entwichen ist, das Bohrloch restlos verfüllt ist und an der Austrittsöffnung 6b die Masse sichtbar wird. Damit wirkt die Öffnung 6b als Kontrollöffnung.

Soll der Verpressdübel an der zu befestigenden Fassadenplatte 7' aussen nicht sichtbar sein, so kann die Platte auch an der Abschlussscheibe 6 befestigt werden. Hierzu kann die Abschlussscheibe in einer rückwärtigen Sackbohrung 7b (Fig. 9) der Platte 7'' einliegen, oder aber über den Schaft ist eine Lochscheibe 13 geschoben, die an der Rückseite der Platte 7' (Fig. 8) mit Dübeln befestigt ist. Zwischen der Abschlussscheibe bzw. der Lochscheibe 13 und der Platte 7' kann noch eine nicht gezeigte Dichtung angeordnet sein, die vorzugsweise eine hülsenförmige, axiale, in die Kanäle eingesteckte Erweiterung aufweist und die Sackbohrung abdichtet. Um die erhärtende Masse in den Dübel einpressen zu können, sind in der Platte Verbindungsbohrungen 17 angeordnet, die zu den Längskammern 3, 3a führen.

Die Montage erfolgt in der Form, dass die auf dem Mauerwerk aufgelegte Platte mit einem Bohrer geringen Querschnitts durchbohrt wird und zugleich im Ankergrund die künftigen Bohrlöcher markiert werden. Die Verpressdübel werden dann in der beschriebenen Form mit der Fassadenplatte verbunden und nach Aufschieben der Dichtungen auf den Dübelschaft in die Wand eingebracht. Da die bisherige Verbindung noch nicht starr ist, ist ein Ausrichten leicht möglich. Die Verpressung erfolgt durch das Bohrloch der Platte.

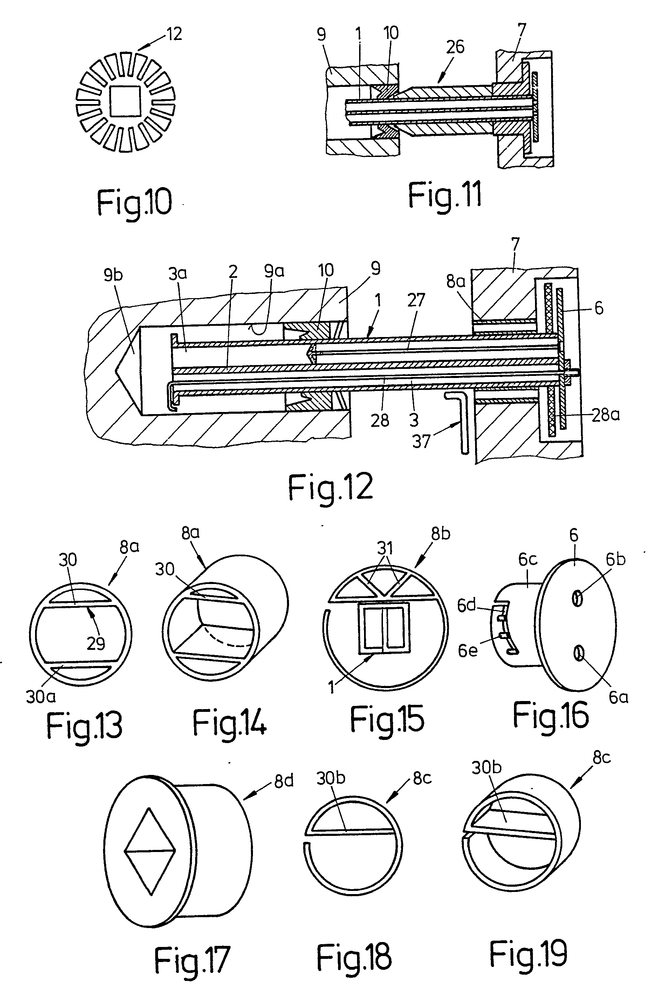

Für eine gleichmässige Verteilung der erhärtenden Masse in der Bohrung 9a der tragenden Wand ist es erforderlich, dass der Verpressdübel koaxial zur Bohrungsachse und mittig einliegt. Ein genauer Abstand zur Bohrungswandung kann durch eine Umbördelung 18 des inneren Endes des Hohlprofils erreicht werden (Fig. 4). Ferner kann an der Aussenseite des Hohlprofils ein Abstandshalter 12 angeordnet werden, dessen Aussenrand an der Innenwand der Bohrung 9a anliegt, und zwar im Berich der Eingangsöffnung der Bohrung 9a. Dieser Abstandshalter kann eine Scheibe sein mit radialen Erweiterungen (Fig. 10).

Ein genauer Abstand wird auch durch eine auf das Profil aufgeschobene Hülse 10 erreicht (Fig. 4), die im Bohrungseingang einliegt und aus elastischem Material besteht, um Biegekräfte gleichmässig zu verteilen. Die Hülse 10 weist einen schlauchabschnittförmigen Ansatz auf, dessen Innenradius zur Hülse hin kleiner wird, um dadurch einen konischen, sich zum Bohrungsgrund hin weiternden Ringraum zu bilden, in dem die eingepresste Masse die Schlauchwandung gegen die Bohrungswandung drückt und dadurch für eine sichere Abdichtung sorgt.

Anstelle des sternförmigen Abstandshalters 12 ist eine Verklammerung der Dichtung (kompressible Hülse 10) durch auf den Dübelschaft aufsteckbare Kunstoffmuffen 26 möglich (Fig. 11). Diese Muffen sind auf dem bohrlochseitigen Ende abgeschrägt. Bei der Montage wird diese Schräge in einen keilförmigen Ausschnitt der Dichtung 10 geschoben, wodurch diese an die Wandung der Bohrung gedrückt wird. Diese Kunststoffhülsen lassen sich vom Stück in beliebiger Menge schneiden oder auch als kurze Einzelteile auf den Ankerschaft aufschieben. Die Distanz Ankergrund/Fassadenplatte ist leicht zu ermitteln und somit auch die Länge dieser Hülsen zu bestimmen.

Im Bereich der Wand 9 weist das Hohlprofil Querbohrungen 14 auf (Fig. 4), die beide Längskammern mit der Aussenseite verbinden und ein Ausfliessen von härtbarer Masse bzw. ein Entlüften zulassen.

Das den Dübelschaft 1, 1' bildende Hohlprofil kann auch aus einem Metallrohr bestehen (Fig. 24 bis 29).

Auf das freie Ende des Dübelschaftes 1 ist wiederum in Fig. 12 eine metallene Abschlussscheibe 6 mit einer daran befestigten quadratischen oder rohrförmigen Hülse 6c (Fig. 16) aussen aufgesteckt, die die beiden Längskammern 3, 3a des Dübels nach aussen verschliesst. In der Scheibe 6 fluchtet die Eintrittsöffnung 6a mit dem Profil 27, so dass durch die Öffnung 6a Füllmasse in die Längskammer 3 eingebracht werden kann. Die in der Abschlussscheibe 6 angeordnete Austrittsöffnung 6b ist mit der Längskammer 3a verbunden, so dass nach vollständig gefüllter Kammer 3a die Füllmasse aus der Öffnung 6b austritt. Die Hülse 6c kann bei kreisförmigem Querschnitt von Hohlprofil 1' und Hülse 6c durch ein am Schaft angeordnetes Aussengewinde und durch ein entsprechendes Innengewinde in der Hülse auf den Dübelschaft aufgeschraubt oder aber durch andere Mittel befestigt sein, so dass die Scheibe 6 der Fassadenplatte 7 einen Halt entgegensetzt, der insbesondere bei Sogkräften, z.B. durch Wind, von Bedeutung ist.

Die Scheibe 6 ist bei dem in Fig. 12 gezeigten Ausführungsbeispiel durch eine Verankerungsstange 27 gehalten, die an ihrem Ende einen Anker trägt, der in der erhärteten Füllmasse Halt findet. Alternativ kann aber auch eine Verankerungsstange 28 das hintere Ende des Dübels umgreifen. Die Verankerungsstange ist entweder an der Scheibe 6 angeschweisst oder angeschraubt. Zwischen der Scheibe 6 und dem Grund 9b der Stufenbohrung in der Platte 7 kann eine elastische Abdichtscheibe 28a angeordnet sein. Eine Befestigung durch Verankerungsstangen erübrigt sich, wenn an der Scheibe 6 eine rohrförmige Hülse 6c befestigt ist, die das freie Ende des Dübelschaftes umgreift und an diesem befestigt ist. Diese Hülse kann aussen auf den Dübelschaft aufgeschraubt oder aber durch einen Bajonettverschluss (Fig. 16) befestigt sein. Hierbei ist in der Hülse 6c ein Schlitz 6d angeordnet, der eine Steigung mit rastenden Einbuchtungen 6e aufweist, so dass die axiale Stellung der Scheibe 6 entsprechend dem Abstand der Platte 7 und entsprechend Massungenauigkeiten veränderbar ist. Die Ausbuchtungen 6e im Schlitz 6d erlauben eine einrastende Halterung der Hülse 6c am nicht gezeigten Stift des Dübelschaftes.

In dem in Fig. 12 dargestellten Ausführungsbeispiel wird der aussen am Dübelschaft für die Rückseite der Fassadenplatte vorstehende Anschlag von einem am Dübelschaft angelenkten Kniehebel 37, Fig. 12, gebildet, dessen längerer Arm während des Durchsteckens durch die Öffnung der Fassadenplatte 7 am Dübelschaft anliegt.

Im Bereich der Fassadenplatte 7 ist auf den Dübelschaft eine metallene Hülse 8a aufgesetzt (Fig. 13 und 14) die einen waagerechten Steg durch eine eingesetzte Metallplatte 30 aufweist, die eine Innenfläche 29 bildet, mit der die Hülse 8a auf der Oberseite des Dübelschaftes 1 aufliegt. Da die Metallplatte 30 breiter ausgeführt ist als die Breite des Dübelschaftes, ist die Hülse 8a gegenüber dem Dübel quer verschieblich. Während bei Fig. 12 die Hülse 8a derart eingesetzt ist, dass die Fassadenplatte 7 aufgrund der Querverschieblichkeit der Hülse Bewegungen in waagerechter Richtung ausführen kann, kann die Hülse 8a auch so eingesetzt werden, dass die Metallplatte 30 senkrecht steht, so dass senkrechte Bewegungen aufgenommen werden können. Dies ist bei einer Befestigung einer Fassadenplatte in ihrem oberen Teil von Bedeutung. In diesem Fall kann, wie in Fig. 13 zu sehen, eine zweite Metallplatte 30a, und damit eine zweite Metallgleitfläche, in der Hülse 8a parallel zur Metallplatte 30 angeordnet sein, wobei der Abstand der Metallplatten nur wenig grösser ist als die Breite des Dübelschaftes 1.

Die Metallplatte 30 kann durch Verstrebungen 31 (Fig. 15) verstärkt sein, und sie kann ein von der Hülsenwandung abgebogener Abschnitt 30b sein (Fig. 18 und Fig. 19). Alternativ kann aber auch die Hülse 8d aus verformbarem, insbesondere vollem elastischem Kunstoffmaterial bestehen, so dass Bewegungen der Platten in mehreren Richtungen aufgenommen werden können. Dabei weist der in der Hülse 8d vorgesehene koaxiale Durchgang Abmessungen auf, die wenig grösser sind als die des Dübelschaftes 1 (Fig. 17).

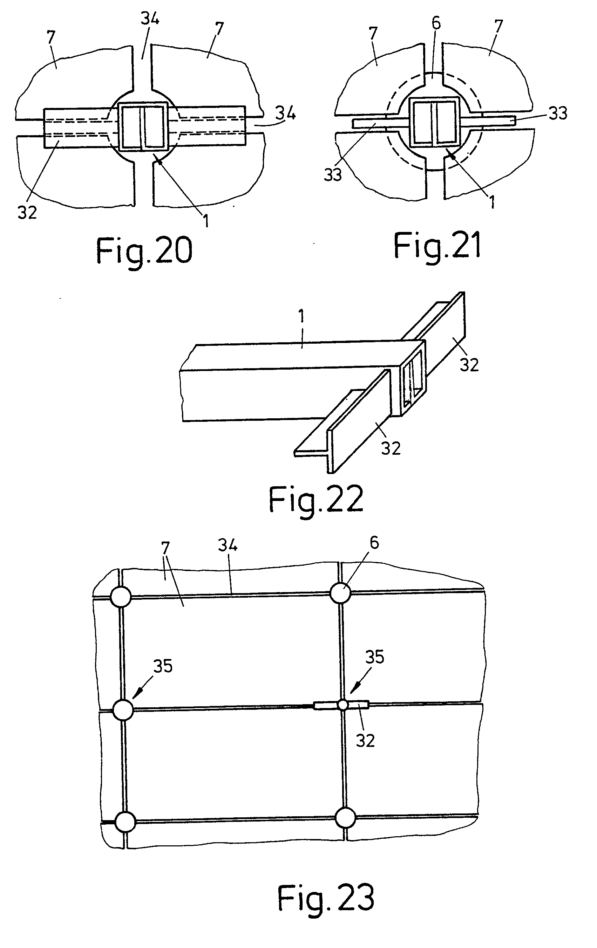

Wie aus Fig. 23 ersichtlich, können die Dübel in Kreuzungspunkten 35 der senkrechten und waagerechten Fugen 34 zwischen den Platten 7 eingesetzt werden, wobei an dem Dübelschaft Profile 32, 33 aus Metall angeschweisst sind, auf denen die Platten mit den Unterseiten stehen. Während das in Fig. 20 und 22 gezeigte Profil 32 T-förmig ist und damit auf die Platten ausgeübte Zugkräfte aufnehmen kann, ist das Profil 33 ein Bandstahl (Fig. 21).

Zur Aufnahme von Zug- und Sogkräften an den Platten sind die obengenannten Scheiben 6 und Profile 32 angeordnet, wobei die Scheibe 6 am Bandstahl 33 befestigt sein kann. Zur Aufnahme von durch die Platten ausgeübten Druckkräften in Richtung zur Wand sind dagegen die in Fig. 24 bis 38 gezeigten Konstruktionen vorgesehen. Jede dieser Ausführungen erlaubt ein Einführen des Dübels durch eine Bohrung oder Öffnung in der Fassadenplatte bis in die Bohrung der Wand hinein auch dann, wenn die Fassadenplatte schon an die Wand angehängt ist. Hierdurch kann ein nachträgliches Befestigen von Fassadenplatten ausgeführt werden. Diese die Platten hintergreifenden Anschlagvorrichtungen liegen im nicht abgespreizten Zustand derart nahe am Dübelschaft an, dass der Dübel durch die Bohrung oder Öffnung der Fassadenplatte leicht hindurchgesteckt werden kann. Ferner haben die geringen Aussenabmessung im nicht abgespreizten Zustand den Vorteil, dass geringe Abmessungen während des Verkaufs, der Lagerung und des Transportes bestehen.

Das in Fig. 24 bis 26 gezeigte, am Dübelschaft mittig angelenkte und gegenüber diesem verschwenkbare kastenförmige Teil 41 entspricht in seinen Innenabmessungen den Aussenabmessungen des Dübelschaftes und weist vier Seitenwände auf, von denen zwei gegenüberliegende Seitenwände durch eine Querachse mittig am Dübelschaft angelenkt sind, und die beiden übrigen Seitenwände 41a und 41b weisen Ausnehmungen 41c und 41d auf, in denen der Dübelschaft bei rechtwinklig angeordnetem Teil 41 einliegt. Zur Aufnahme von Sogkräften an der Platte 7 kann die in der Platte 7 einliegende Hülse 8f an dem kastenförmigen Teil 41 durch eine Schraube 42a befestigt werden, wobei der äussere Rand 8g der Hülse 8f den Rand der in der Platte 7 befindlichen Bohrung aussen umgreift. Der äussere Rand der Bohrung und der Rand 8g sind in dem in Fig. 25 gezeigten Ausführungsbeispiel konisch sich nach aussen erweiternd geformt.

Bei der in Fig. 27 gezeigten Konstruktion weist der Dübelschaft eine Querbohrung auf, in der ein Stift 36 längsverschieblich einliegt, wobei Anschläge an den Enden des Stiftes ein Herausgleiten aus der Bohrung des Dübelschaftes verhindern und der Stift 36 eine Länge aufweist, die wenig geringer ist als der Durchmesser der Plattenöffnung und grösser als die Höhe des Dübelschaftes.

Statt dessen kann auch am Dübelschaft eine längsgeschlitzte Platte 39 (Fig. 28) verschieblich und drehbar geführt sein, wobei im Schlitz 39a ein Zapfen 40 des Dübels einliegt. Während des Durchsteckens des Dübels durch die Öffnung der Platte 7 wird die Platte 39 an der Seitenwandung des Dübels parallel angelegt und danach im Hohlraum zwischen Fassadenplatte 7 und Wand 15 hochgeschwenkt und nach unten verschoben, wonach ein am Dübel befestigter Zapfen 40a ein Verschwenken der Platte 39 nach hinten verhindert, so dass die vordere Stirnseite der Platte 39 einen Anschlag für die Fassadenplatte bildet. Die in Fig. 29 gezeigten zweiarmigen Hebel 38 bilden nach einem Verschwenken gegenüber der Dübellängsachse auch einen Anschlag mit ihren Längskanten, wobei in der rechtwinklig zur Längsachse angeordneten Stellung jeweils ein abgekantetes Ende 38a des Hebels 38 eine Kante des kastenförmigen Profils des Dübelschaftes umgreift bzw. an einer Seitenfläche des Dübelschaftes anliegt. Dies wird dadurch ermöglicht, dass der zweiarmige Hebel 38 gegenüber der Anlenkstelle nicht nur drehbar, sondern in Richtung des Anlenkstiftes axial verschieblich ist.

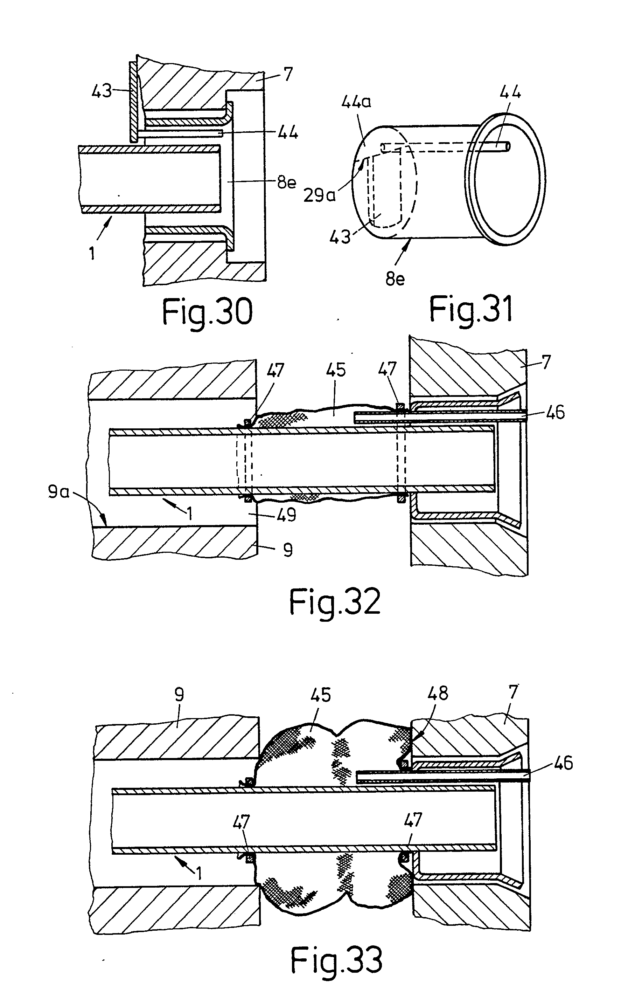

In dem Fall, in dem dafür gesorgt wird, dass die in der Fassadenplatte einliegende und in diesem Bereich den Dübel umgebende Hülse am Dübel in Längsrichtung des Dübels unverschieblich geführt ist, kann an der Rückseite einer Hülse 8e eine Platte 43 angelenkt sein, die hinter der Fassadenplatte 7 hochgeschwenkt wird (Fig. 30, 31). Die Platte 43 ist an einer Welle 44 drehfest angeordnet, die achsparallel in der Hülse 8e einliegt und in einem kreisabschnittförmigen Teil 44a des hinteren Bodens der Hülse 8e drehbar gelagert ist. Die Hülse 8e unterscheidet sich ferner von dem bisher Genannten dadurch, dass der Dübelschaft nicht an einer Seitenfläche einer in der Hülse angebrachten Platte anliegt, sondern an der unteren Kante des Teiles 44a. In einer anderen Ausführung wird die Hülse 8f mit dem Winkelhebel 41 durch eine Schraube 42a verschraubt, wobei durch rechtwinklig zueinander angeordnete Langlöcher 42b, 42c in Hülse 8f und Hebel 4 eine starre Verbindung vermieden wird (Fig. 25).

Bei dem in den Fig. 32 und 33 gezeigten Ausführungsbeispiel wird der Anschlag für die Fassadenplatte durch ein schlauchförmiges Netz 45 gebildet, das den Dübelschaft 1 in dem Bereich umgibt, der zwischen Fassadenplatte 7 und Wand 9 liegt. Das schlauchförmige Netz ist auf zwei einander gegenüberliegenden Seiten durch Manschetten 47 am Dübelschaft abdichtend befestigt und wird durch aushärtbare Füllmasse gefüllt, wobei es sich erheblich ausdehnt und gegenüber dem Dübel eine derartige Breite einnimmt, dass, wie in Fig. 33 gezeigt, eine Anlagefläche 48 für die Platte 7 geschaffen wird und ferner die Öffnung 49 der Bohrung 9a abgedichtet wird. Das Netz 45 weist eine derart dichte Struktur auf, dass auch im ausgedehnten Zustand Füllmasse nicht durch das Netzmaterial hindurchgelassen wird. Die Füllmasse wird entweder durch eine Längskammer im Dübel und eine seitliche Öffnung im Dübel in das Netz eingedrückt oder aber durch ein Rohr 46, das achsparallel zum Dübelschaft aussen am Dübel angebracht ist. Alternativ kann auch das Rohr im Dübelschaft einliegen und über eine seitliche Öffnung im Dübelschaft zum Netz hin austreten. Ferner kann das Netz auch weit in die Bohrung 9a hineinreichen und damit zusätzlich für eine Verankerung des Dübels in der Bohrung sorgen. Das strumpfförmige Netz 45 darf nicht durch den von der Füllmasse ausgeübten Innendruck in die Öffnung der Platte 7 gelangen, da hierdurch die Beweglichkeit der Platte 7 gegenüber dem Dübel verhindert würde. Um ein Hereindrücken des Netzes 45 in die Öffnung der Platte 7 zu verhindern, ist auf dem Dübelschaft 1 enganliegend eine nicht dargestellte Scheibe aufgesetzt, die mittig eine Öffnung aufweist, die den Querschnittsabmessungen des Dübelschaftes entspricht.

## Patentansprüche

1. Hohler Verpressdübel mit einem aufsteckbaren Verschlussstopfen für den dichten Bohrlochabschluss, wobei der Dübelschaft teilweise in eine Bauwerksbohrung einsteckbar und im Bohrloch durch eine aushärtbare Füllmasse fixierbar ist, die durch den Dübelschafthohlraum in das Bohrloch einpressbar ist, und an dessen frei herausragendem Abschnitt Bekleidungsteile, wie Fassadenplatten, oder andere Bauteile befestigbar sind, dadurch gekennzeichnet, dass der Hohlraum des Dübelschaftes (1, 1', 1") durch mindestens eine, sich über die Schaftlänge erstreckende, innere, den Dübel versteifende Trennwand (2) in getrennte Einfüll- und Entlüftungslängskammern (3, 3a) unterteilt ist.

2. Dübel nach Anspruch 1, dadurch gekennzeichnet, dass die innere Trennwand (2) eben ausgeführt ist.

3. Dübel nach Anspruch 1 oder 2, dadurch gekennzeichnet, dass der Dübelschaft (1, 1', 1") aus einem rechteckförmigen Blechabschnitt gefaltet ist, von dem ein seitlicher, sich längs erstreckender Randbereich die innere Trennwand (2) bildet.

4. Dübel nach einem der Ansprüche 1 bis 3, dadurch gekennzeichnet, dass die innere Trennwand doppelwandig ausgeführt ist.

5. Dübel nach einem der Ansprüche 1 bis 4, dadurch gekennzeichnet, dass am vorderen Ende des herausragenden Abschnitts (4) eine Abschlussscheibe (6) auf der Stirnseite des Dübelschaftes (1, 1', 1") befestigt ist, die einen grösseren Durchmesser aufweist als der des Dübelschaftes, und die die Längskammern bis auf eine Eintrittsöffnung (6a) für die einzuführende Masse und eine Austritts- und Kontrollöffnung (6b) für die entweichende Luft verschliesst.

6. Dübel nach Anspruch 5, dadurch gekennzeichnet, dass an der Abschlussscheibe (6) eine Hülse (6c) befestigt ist, die das freie Ende des Dübelschaftes aussen umgreift und insbesondere auf dem freien Ende aufgeschraubt ist.

7. Dübel nach Anspruch 6, dadurch gekennzeichnet, dass die Hülse (6c) durch einen Bajonettverschluss (6d) am Dübelschaft (1) befestigt ist und der in der Hülse (6c) befindliche Schlitz des Bajonettverschlusses (6d) eine Steigung mit rastenden Einbuchtungen (6e) aufweist.

8. Dübel nach einem der Ansprüche 5 bis 7, dadurch gekennzeichnet, dass an der Abschlussscheibe (6) eine in den Dübel hineinreichende Verankerungsstange (27, 28) befestigt ist.

9. Dübel nach Anspruch 8, dadurch gekennzeichnet, dass die Verankerungsstange (28) das in der Bohrung (9a) einliegende Ende des Dübels umgreift.

10. Dübel nach einem der Ansprüche 1 bis 9, dadurch gekennzeichnet, dass diametral gegenüberliegend auf beiden Seiten des freien Endes des Dübelschaftes (1) miteinander fluchtende Profile (32, 33) rechtwinklig zum Schaft waagerecht befestigt sind, auf denen die Unterseiten von Fassadenplatten zur Anlage gelangen.

11. Dübel nach Anspruch 10, dadurch gekennzeichnet, dass die Profile T-förmig oder bandförmig sind.

12. Dübel nach Anspruch 10 oder 11, dadurch gekennzeichnet, dass die Profile (32, 33) an der an der Vorderseite des Dübelschaftes (1) angeordneten Abschlussscheibe (6) befestigt sind.

13. Dübel nach einem der Ansprüche 1 bis 12, dadurch gekennzeichnet, dass im Bereich der am Dübel befestigten Bekleidungs- oder Bauteile der Dübelschaft (1) von einer Hülse (8a bis 8f) umgeben ist, die eine begrenzte Bewegung des Bekleidungs- oder Bauteiles (7) gegenüber dem Dübelschaft zulässt.

14. Dübel nach Anspruch 13, dadurch gekennzeichnet, dass die Hülse (8a-8f) eine obere waagerechte Innenfläche (29) oder Innenkante (29a) aufweist, die auf der Oberseite des Dübelschaftes (1) quer zur Dübellängsachse verschieblich aufliegt.

15. Dübel nach Anspruch 14, dadurch gekennzeichnet, dass die Innenfläche (29) von der Unterseite einer sehnenförmig im Hülseninneren angeordneten Platte (30) gebildet wird.

16. Dübel nach Anspruch 15, dadurch gekennzeichnet, dass die Platte (30b) ein von der Hülsenwandung abgebogener Abschnitt ist.

17. Dübel nach Anspruch 15 oder 16, dadurch gekennzeichnet, dass die Hülse (8a-8c, 8e, 8f) aus Metall, insbesondere aus Edelstahl, besteht.

18. Dübel nach Anspruch 13, dadurch gekennzeichnet, dass die Hülse (8d) aus elastischem Material besteht, deren Öffnung dem Querschnitt des Dübelschaftes (1) angepasst ist.

19. Dübel nach einem der Ansprüche 1 bis 18, dadurch gekennzeichnet, dass aussen am Dübelschaft ein Anschlag vorsteht, an dem die Rückseite der Fassadenplatte (7) zur Anlage gelangt und dessen Anschlagsfläche erst nach Durchstecken des Dübels durch die Öffnung der Fassadenplatte (7) vom Dübelschaft absteht.

20. Dübel nach Anspruch 19, dadurch gekennzeichnet, dass der Anschlag von einem quer zur Dübellängsachse verschieblichen Stift (36, Fig. 31) gebildet wird.

21. Dübel nach Anspruch 19, dadurch gekennzeichnet, dass der Anschlag von einem am Dübelschaft (1) angelenkten Kniehebel (37 Fig. 12) gebildet wird, dessen längerer Arm während des Durchsteckens durch die Öffnung der Fassadenplatte (7) am Dübelschaft anliegt.

22. Dübel nach Anspruch 19, dadurch gekennzeichnet, dass der Anschlag von der Schmalseite eines zweiarmigen Hebels (38, Fig. 29) gebildet wird, der während des Durchsteckens durch die Fassadenplatte (7) längs des Dübelschaftes liegt und danach mit einem abgekanteten Ende (38a) eine Längskante des Dübelschaftes umgreift.

23. Dübel nach Anspruch 19, dadurch gekennzeichnet, dass der Anschlag von der Schmalseite einer länglichen längsgeschlitzten Platte (39, Fig. 28) gebildet wird, die um einen im Plattenschlitz (39a) einliegenden Zapfen (40) des Dübelschaftes (1) drehbar und in einer rechtwinkligen Stellung zur Dübellängsachse in eine arretierte Stellung schiebbar ist.

24. Dübel nach Anspruch 19, dadurch gekennzeichnet, dass der Anschlag von einem kastenförmigen Teil (41, Fig. 24-26) gebildet wird, dessen Seitenwände (41a, 41b) während des Durchsteckens des Dübels durch die Fassadenplatte eng am Dübelschaft (1) anliegen, und der danach um eine Querachse (42) des Dübelschaftes in eine rechtwinklig abstehende Stellung drehbar ist, in der der Dübelschaft in Ausnehmungen (41c, 41d) der Seitenwände (41a, 41b) einliegt.

25. Dübel nach Anspruch 24, dadurch gekennzeichnet, dass die Hülse (8f) an dem kastenförmigen Teil (41) angeschraubt ist.

26. Dübel nach Anspruch 19, dadurch gekennzeichnet, dass der Anschlag von einer Platte (43, Fig. 30, 31) gebildet wird, die an der Rückseite der den Dübelschaft umgebenden Hülse (8e) um eine zur Dübellängsachse parallele Achse verschwenkbar angelenkt ist.

27. Dübel nach Anspruch 26, dadurch gekennzeichnet, dass in der Hülse (8e) achsparallel eine Welle (44) drehbar gelagert ist, an deren hinten über die Hülse herausragendem Ende die Platte (43) drehfest angeordnet ist.

28. Dübel nach Anspruch 19, dadurch gekennzeichnet, dass zur Bildung des Anschlags der Dübelschaft (1) aussen zumindest im Bereich zwischen Fassadenplatte und Wand von einer dehnbaren Hülle oder einem dehnbaren engmaschigen Netz (45) umgeben ist und zwischen Dübelschaftaussenfläche und Hülle bzw. Netz aushärtbare Füllmasse einbringbar ist.

29. Dübel nach Anspruch 28, dadurch gekennzeichnet, dass die Füllmasse durch ein zusätzlich am oder im Dübelschaft (1) angeordnetes Rohr (46) geringeren Durchmessers als der des Dübelschaftes in die Hülle bzw. das Netz (45) eingebracht wird.

30. Dübel nach einem der Ansprüche 1 bis 29, dadurch gekennzeichnet, dass der Schaft aus einem Fertigprofil gefertigt ist.

**Claims**

1. Hollow compression dowel with an attachable closing plug for a leak-proof drill-hole closure, the dowel shank being partially insertable into a structure bore and being fixable in the drill-hole by means of a hardenable filling material which can be pressed into the drill-hole through the dowel-shank cavity, and to tre freely projecting portion of which can be fastened lining parts such as façade panels, or other constructional parts, characterised in that the cavity of the dowel-shank (1, 1', 1") is subdivided into separate longitudinal filling and venting chambers (3, 3a) by means of at least one inner partition wall (2) extending over the shank length and stiffening the dowel.

2. Dowel according to Claim 1, characterised in that the inner partition wall (2) is made plane.

3. Dowel according to Claim 1 or 2, characterised in that the dowel-shank (1, 1', 1") is folded from a rectangular sheet-metal portion, a lateral, longitudinally extending edge region of which forms the inner partition wall (2).

4. Dowel according to one of Claims 1 to 3, characterised in that the inner partition wall is made doublewalled.

5. Dowel according to one of Claims 1 to 4, characterised in that fastened to the front end of the projecting portion (4), on the end face of the dowel-shank (1, 1', 1"), is a closing disc (6) which has a larger diameter than that of the dowel-shank and which closed tre longitudinal chambers with the exception of an inlet orifice (6a) for the material to be introduced and an outlet and inspection orifice (6b) for the escaping air.

6. Dowel according to Claim 5, characterised in that fastened to the closing disc (6) is a sleeve (6c) which surrounds the free end of the dowel-shank on the outside and is especially screwed on the free end.

7. Dowel according to Claim 6, characterised in that the sleeve (6c) is fastened to the dowel-shank (1) by means of a bayonet lock (6d), and the slot of the bayonet lock (6d) located in the sleeve (6c) has a slope with engaging notches (6e).

8. Dowel according to one of Claims 5 to 7, characterised in that an anchoring rod (27, 28) extending into the dowel is fastened to the closing disc (6).

9. Dowel according to Claim 8, characterised in that the anchoring rod (28) surrounds the end of the dowel inserted in the bore (9a).

10. Dowel according to one of Claims 1 to 9, characterised in that profiles (32, 33) which are aligned with one another and against which the undersides of façade panels come to rest are fastened horizontally, at right angles to the shank and diametrically opposite one another on both sides of the free end of the dowel-shank (1).

11. Dowel according to Claim 10, characterised in that the profiles are T-shaped or strip-shaped.

12. Dowel according to Claim 10 or 11, characterised in that the profiles (32, 33) are fastened to the closing disc (6) located on the front side of the dowel-shank (1).

13. Dowel according to one of Claims 1 to 12, characterised in that in the region of the lining or constructional parts fastened to the dowel the dowel-shank (1) is surrounded by a sleeve (8a to 8f) which allows limited movement of the lining or constructional part (7) in relation to the dowel-shank.

14. Dowel according to Claim 13, characterised in that the sleeve (8a-8f) has an upper horizontal inner face (29) or inner edge (29a) which rests on the top side of the dowel-shank (1) so as to be displaceable transversely to the longitudinal axis of the dowel.

15. Dowel according to Claim 14, characterised in that the inner face (29) is formed by the underside of a plate (30) arranged in the form of a chord in the sleeve interior.

16. Dowel according to Claim 15, characterised in that the plate (30b) is a portion bent off from the sleeve wall.

17. Dowel according to Claim 15 or 16, characterised in that the sleeve (8a-8c, 8e, 8f) consists of metal, especially stainless steel.

18. Dowel according to Claim 13, characterised in that the sleeve (8d) consists of elastic material, the orifice of which matches the cross-section of the dowel-shank (1).

19. Dowel according to one of Claims 1 to 18, characterised in that there projects on the outside of the dowel-shank a stop against which the rear side of the façade panel (7) comes to rest and the stop face of which projects from the dowel-shank only after the dowel has been inserted through the orifice in the façade panel (7).

20. Dowel according to Claim 19, characterised in that the stop is formed by a pin (36, Fig. 31) displaceable transversely to the longitudinal axis of the dowel.

21. Dowel according to Claim 19, characterised in that the stop is formed by a bent lever (37, Fig. 12) which is articulated on the dowel-shank (1) and the longer arm of which rests against the dowel-shank during insertion through the orifice in the façade panel (7).

22. Dowel according to Claim 19, characterised in that the stop is formed by the narrow side of a two-armed lever (38, Fig. 29) which lies along the dowel-shank during insertion through the façade panel (7) and which thereafter surrounds a longitudinal edge of the dowel-shank by means of a folded end (38a).

23. Dowel according to Claim 19, characterised in that the stop is formed by the narrow side of an elongate longitudinally slotted plate (39, Fig. 28) which is rotatable about a peg (40) of the dowel-shank (1) located in the plate slot (39a) and which, in a position at right angles to the longitudinal axis of the dowel, can be pushed into a locked position.

24. Dowel according to Claim 19, characterised in that the stop is formed by a box-shaped part (41, Figs. 24-26), the side walls (41a, 41b) of which rest closely against the dowel-shank (1) during insertion of the dowel through the façade panel and which is thereafter rotatable about a transverse pivot (42) of the dowel-shank into a position projecting at right angles, in which the dowel-shank is located in recesses (41c, 41d) in the side walls (41a, 41b).

25. Dowel according to Claim 24, characterised in that the sleeve (8f) is screwed to the box-shaped part (41).

26. Dowel according to Claim 19, characterised in that the stop is formed by a plate (43, Figs. 30, 31) which is articulated, so as to be pivotable about an axis parallel to the longitudinal axis of the dowel, on the rear side of the sleeve (8e) surrounding the dowel-shank.

27. Dowel according to Claim 26, characterised in that a shaft (44) is rotatably mounted axis-parallel in the sleeve (8e), and the plate (43) is located in a manner fixed against rotation to the end of the shaft projecting beyond the sleeve at the rear.

28. Dowel according to Claim 19, characterised in that, to form the stop, the dowel-shank (1) is surrounded on the outside, at least in the region between the façade panel and the wall, by an expandable envelope or an expandable close-meshed net (45), and hardenable filling material can be introduced between the outer surface of the dowel-shank an the envelope or net.

29. Dowel according to Claim 28, characterised in that the filling material is introduced into the envelope or net (45) through a tube (46) arranged additionally on or in the dowel-shank (1) and having a smaller diameter than that of the dowel-shank.

30. Dowel according to one of Claims 1 to 29, characterised in that the shank is made from a finished profile.

**Revendications**

1. Cheville de scellement creuse présentant un bouchon d'obturation pour la fermeture étanche d'un trou borgne, la tige de la cheville pouvant être partiellement introduite dans un alésage d'une construction et pouvant être fixée dans ledit trou borgne au moyen d'une matière de remplissage durcissable qui peut être injectée dans le trou borgne à travers le volume creux de la tige de cheville, des pièces de revêtement telles que des plaques de façade, ou d'autres éléments de construction pouvant être fixés à la section saillante libre de ladite cheville, caractérisée par le fait que le volume creux de la tige de cheville (1, 1', 1") est divisée en chambres longitudinales séparées de remplissage et d'aération (3, 3a) par au moins une paroi de séparation (2) s'étendant sur la longueur de la tige et raidissant la cheville.

2. Cheville selon la revendication 1, caractérisée par le fait que la paroi de séparation intérieure (2) est plane.

3. Cheville selon l'une des revendications 1 et 2, caractérisée par le fait que la tige de cheville (1, 1', 1'') est constituée par pliage d'une section rectangulaire de plaque métallique dont une zone de bordure latérale s'étendant longitudinalement constitue la paroi de séparation intérieure (2).

4. Cheville selon l'une des revendications 1 à 3, caractérisée par le fait que la paroi de séparation intérieure est à paroi double.

5. Cheville selon l'une des revendications 1 à 4, caractérisée par le fait qu'un disque d'obturation (6) est fixé à l'extrémité antérieure de la section saillante (4) sur la face frontale de la tige de cheville (1, 1', 1'') qui présente un diamètre supérieur à celui de la tige de cheville et qui ferme les chambres longitudinales jusqu'à une ouverture d'entrée (6a) pour la masse à introduire et une ouverture de sortie et de contrôle (6b) pour l'air s'échappant.

6. Cheville selon le revendication 5, caractérisée par le fait qu'une douille (6c) fixée au disque d'obturation (6) entoure extérieurement l'extrémité libre de la tige de cheville et est en particulier vissée sur l'extrémité libre.

7. Cheville selon la revendication 6, caractérisée par le fait que la douille (6c) est fixée sur la tige de cheville (1) par une fermeture à baïonnette (6d) et la fente de la fermeture à baïonnette (6d) se trouvant dans la douille (6c) présente un pente avec des échancrures d'encliquetage (6e).

8. Cheville selon l'une des revendications 5 à 7, caractérisée par le fait qu'une tige d'ancrage (27, 28) s'étendant à l'intérieur de la cheville est fixée au disque d'obturation (6).

9. Cheville selon la revendication 8, caractérisée par le fait que la tige d'ancrage (28) s'étend autour de l'extrémité de la cheville logée dans le trou (9a).

10. Cheville selon l'une des revendications 1 à 9, caractérisée par le fait que des profilés (32, 33) alignés entre eux sont fixés horizontalement diamétralement opposés sur les deux côtés de l'extrémité libre de la tige de cheville (1) perpendiculairement à la tige, les faces inférieures de plaques de façade venant s'appuyer contre eux.

11. Cheville selon la revendication 10, caractérisée par le fait que les profilés sont en forme de T ou de bandes.

12. Cheville selon l'une des revendications 10 et 11, caractérisée par le fait que les profilés (32, 33) sont fixés au disque d'obturation (6) disposé sur la face antérieure de la tige de cheville (1).

13. Cheville selon l'une des revendications 1 à 12, caractérisée par le fait que la tige de cheville (1) est entourée par une douille (8a à 8f) dans la zone des éléments de revêtement ou de construction fixés à la cheville, cette douille permettant un déplacement limité de l'élément de revêtement ou de construction (7) par rapport à la tige de cheville.

14. Cheville selon la revendication 13, caractérisée par le fait que la douille (8a-8f) présente une surface intérieure (29) ou une arête intérieure (29a) supérieure horizontale qui repose à coulissement sur la face supérieure de la tige de cheville (1) transversalement à l'axe longitudinal de la cheville.

15. Cheville selon la revendication 14, caractérisée par le fait que la surface intérieure (29) est constituée par la face inférieure d'une plaque en forme de corde (30) disposée à l'intérieur de la douille.

16. Cheville selon la revendication 15, caractérisée par le fait que la plaque (30b) est une section pliée de la paroi de douille.

17. Cheville selon l'une des revendications 15 et 16, caractérisée par le fait que la douille (8a-8c, 8e, 8f) est en métal, en particulier en acier fin.

18. Cheville selon la revendication 13, caractérisée par le fait que la douille (8d) est constituée d'un matériau élastique et son ouverture est ajustée à la section transversale de la tige de cheville (1).

19. Cheville selon l'une des revendications 1 à 18, caractérisée par le fait qu'une butée fait saillie de la tige de cheville vers l'extérieur, sur laquelle vient en appui la face arrière de la plaque de façade (7) et dont la surface de butée ne s'écarte de la tige de cheville qu'après enfoncement de la cheville à travers l'ouverture de la plaque de façade (7).

20. Cheville selon la revendication 19, caractérisée par le fait que la butée est constituée par une goupille (36, fig. 27) coulissant transversalement par rapport à l'axe longitudinal de la cheville.

21. Cheville selon la revendication 19, caractérisée par le fait que la butée est formée par un levier à génouillère (37, fig. 12) articulé sur la tige de cheville (1).

22. Cheville selon la revendication 19, caractérisée par le fait que la butée est formée par le petit côté d'un levier à deux bras (38, fig. 29) qui, pendant l'enfoncement de la plaque de façade (7) est logé le long de la tige de cheville et est ensuite en prise par une extrémité repliée (38a) avec une arête longitudinale de la tige de cheville.

23. Cheville selon la revendication 19, caractérisée par le fait que la butée est formée par le petit côté d'une plaque allongée munie d'une fente longitudinale (39, fig. 28) qui est pivotante autour d'un téton (40) logé dans la fente (39a) de la plaque et peut coulisser dans une position d'arrêt orthogonale à l'axe longitudinal de la cheville.

24. Cheville selon la revendication 19, caractérisée par le fait que la butée est formée par une pièce en forme de boîte (41, figures 24-26) dont les parois latérales (41a, 41b), pendant l'enfoncement de la cheville à travers la plaque de façade, sont logées adjacentes à la tige de cheville (1) et qui peut ensuite pivoter autour d'un axe transversal (42) de la tige de cheville jusqu'à une position orthogonale dans laquelle la tige de cheville est logée dans des évidements (41c, 41d) des parois latérales (41a, 41b).

25. Cheville selon la revendication 24, caractérisée par le fait que la douille (8f) est vissée sur la pièce en forme de boîte (41).

26. Cheville selon la revendication 19, caractérisée per le fait que la butée est formée par une plaque (43, figures 30, 31) montée pivotante sur la face arrière de la douille (8e) entourant la tige de cheville autour d'un axe parallèle à l'axe longitudinal de la cheville.

27. Cheville selon la revendication 26, caractérisée par le fait qu'un arbre (44) est monté pivotant dans la douille (8e) à axe parallèle avec celle-ci, la plaque (43) étant montée fixe en rotation à l'extrémité de l'arbre saillante en arrière au-delà de la douille.

28. Cheville selon la revendication 19, caractérisée par le fait que, pour former la butée, la tige de cheville (1) est entourée à l'extérieur au moins dans la zone entre plaque de façade et paroi par une gaine élastique ou un filet élastique à mailles serrées (45) et une matière de remplissage durcissable peut être amenée entre la surface extérieure de la tige de cheville et la gaine ou le filet.

29. Cheville selon la revendication 28, caractérisée par le fait que la matière de remplissage est amenée dans la gaine ou le filet (45) par un tube (46) de diamètre inférieur à celui de la tige de cheville ajouté sur ou dans la tige de cheville (1).

30. Cheville selon l'une des revendications 1 à 29, caractérisée par le fait que la tige est réalisée en un profilé préfabriqué.

Fig.1  Fig.2  Fig.3

Fig.4

Fig.5  Fig.6  Fig.7

Fig.8  Fig.9

0 014 728

Fig.10

Fig.11

Fig.12

Fig.13

Fig.14

Fig.15

Fig.16

Fig.17

Fig.18

Fig.19

15

Fig.20

Fig.21

Fig.22

Fig.23

Fig.24

Fig.25

Fig.26

Fig.27

Fig.28

Fig.29

Fig.30

Fig.31

Fig.32

Fig.33